# EUROPÄISCHE PATENTSCHRIFT

(11) **EP 1 502 011 B1**
(45) Veröffentlichungstag und Bekanntmachung des Hinweises auf die Patenterteilung: **09.11.2005**
(21) Anmeldenummer: 03714896.2
(22) Anmeldetag: 28.03.2003
(51) Int. Cl.: F01L 1/047, F16H 53/02, B21D 53/84

(54) **EINSTÜCKIG AUSGEBILDETER NOCKEN UND VERFAHREN ZUM HERSTELLEN DES NOCKENS SOWIE ZUSAMMENBAU EINER STEUERWELLE ODER NOCKENWELLE**
SINGLE-PIECE CAM, METHOD FOR THE PRODUCTION THEREOF, AND ASSEMBLY OF A CAMSHAFT
CAME MONOBLOC, SON PROCEDE DE FABRICATION, ET ASSEMBLAGE D'UN ARBRE DE COMMANDE OU ARBRE A CAME

(30) Priorität: 29.04.2002 DE 10219195
(43) Veröffentlichungstag der Anmeldung: 02.02.2005
(73) Patentinhaber: ThyssenKrupp Automotive AG, 44793 Bochum (DE)
(72) Erfinder: WIESNER, Peter, A-6713 Ludesch (AT); MEUSBURGER, Peter, Dr., A-6800 Feldkirch (AT); MÜLLER, Oskar, A-6721 Thüringerberg (AT)
(74) Vertreter: Adams, Steffen
(86) Internationale Anmeldenummer: PCT/EP2003/003232
(87) Internationale Veröffentlichungsnummer: WO 2003/093654

(56) Entgegenhaltungen:
- EP-A- 0 580 200
- WO-A-03/027446
- DE-A- 3 738 809
- DE-A- 4 132 802
- GB-A- 2 050 207
- US-A- 4 798 178

## Beschreibung

Die Erfindung betrifft einen einstückig ausgebildeten Nocken für eine gebaute Nockenwelle oder Steuerwelle.

Gebaute Nockenwellen, bei denen einstückig ausgebildete Nocken mittels unterschiedlichster Befestigungsverfahren auf einer Tragachse, vorzugsweise auf einem Tragrohr, befestigt sind, setzen sich aufgrund ihrer einfacheren Herstellungsweise und aufgrund ihres geringeren Gewichts verstärkt beim Einsatz in Kraftfahrzeugmotoren durch.

Überwiegend sind die einstückigen Nocken scheibenförmig ausgebildet. Um eine Gewichtsreduzierung zu erreichen, ist es nach der DE 37 38 809 C2 aber auch bekannt, in die Nockenseiten Einziehungen einzubringen. Nachteilig gestaltet sich die Herstellung derartiger Einziehungen jedoch schwierig und teuer. Sofern sie mechanisch hergestellt werden, ergibt sich ein großer Arbeitsaufwand und hoher Werkzeugverschleiß. Ein hoher Werkzeugverschleiß ergibt sich jedoch auch bei spanloser Herstellung, wie beispielsweise Schmieden, Fließpressen oder Sinterfertigung. Von daher hat sich diese Art der Gewichtserleichterung bei Nocken für gebaute Nockenwellen bisher nicht durchgesetzt. Ein anderes Beispiel einer gewichtsreduzierenden Nocke ist in Dokument EP 0 580 200 zu sehen. Die vorstehende Anwendung für Nockenwellen gilt in gleicher Weise auch für Steuerwellen, z.B. für die Verstellwellen der mechanischen variablen Ventilgetriebe. Entsprechend können die Nocken auch Kurvenbahnen als Umfangskontur aufweisen.

Der Erfindung liegt die Aufgabe zugrunde, bei Nocken für gebaute Nockenwellen oder Steuerwellen eine erhöhte Gewichtsreduzierung zu erreichen.

Diese Aufgabe wird erfindungsgemäß mit den Merkmalen des Anspruchs 1 erreicht. Vorteilhafte Aus- und Weiterbildungen sind in den Ansprüchen 2 bis 14 beschrieben. Anspruch 15 beschreibt ein Verfahren zur Herstellung eines Nockens nach einem oder mehreren der Ansprüche 1 bis 14 und Anspruch 16 ein Verfahren zum Zusammenbau einer Nockenwelle oder einer Steuerwelle unter Verwendung eines Nockens nach einem oder mehreren der Ansprüche 1 bis 14.

Nocken nach der Erfindung sind nicht nur wesentlich leichter als die bisherigen einstückig ausgebildeten Nocken für gebaute Nockenwellen. Sie weisen darüber hinaus den Vorteil auf, dass sie wesentlich einfacher herstellbar sind und dass bei der Herstellung der Werkzeugverschleiß unvergleichbar niedriger ist als bei der Herstellung von Nocken nach dem Stand der Technik.

Durch die Herstellung des Nockens als warm oder kalt geschmiedeter Nocken mit den in den Ansprüchen 1 bis 14 gezeigten Merkmalen, ist der Nocken auch in seiner Lauffläche schmaler ausgebildet als bisher verwendete Nocken. Durch das Fertigungsverfahren lassen sich kleine Radien am Kranz am Übergang von der Außenkontur des Nockens zu den Stimflächen des Nockens erreichen. Dadurch ist die tragende Fläche der Außenkontur größer als bei konventionell hergestellten Nocken. Das erlaubt eine Verringerung der Nockenbreite, wodurch eine Material- und damit weitere Gewichtseinsparung erreicht wird. Radien von unter 1 mm, bevorzugt 0,2 bis 0,5 mm, lassen sich hier erreichen.

Bisher wurde stets angenommen, dass die Fügebreite, die mit der Dicke des Nockens korrespondiert, zur Erreichung der hohen geforderten Festigkeiten möglichst groß sein soll. Bisher wurden Fügebreiten von 10 mm und mehr angewendet. Die Entwicklung hat jedoch gezeigt, dass bei Verwendung der neuartigen Nocken Fügebreiten von weniger als 6 mm, bevorzugt im Bereich von 3 bis 5 mm, ausreichend sind.

Weiterhin vorteilhaft lassen sich derartige Nocken wesentlich einfacher härten als Nocken bekannter Bauform. Insbesondere, wenn gemäß Anspruch 9 zwischen dem Nocken und der Tragachse eine Buchse eingesetzt wird und von daher der gesamte Nocken gehärtet ausgebildet ist oder aus einem naturharten, hochverschleißfesten Werkstoff besteht. Bei dieser Merkmalskombination besteht nicht die Gefahr, dass sich der durchgehend harte Nocken während des Betriebes in die Tragachse einarbeitet und somit die Festigkeit der Tragachse reduziert bzw. die Kraftschlussverbindung zwischen Nocken und Tragachse gelockert wird.

Ein Ausführungsbeispiel der Erfindung ist in der Zeichnung dargestellt und wird im Folgenden näher beschrieben. Es zeigen
Fig. 1 Ansicht und Schnitt eines Nockenwellenabschnitts im Bereich eines Nockens,
Fig. 2 eine alternative Ausbildung entsprechend Fig. 1,
Fig. 3 einen Nocken mit einer unrunden inneren Öffnung und
Fig. 4 einen Nocken entsprechend Fig. 3.

Gebaute Nockenwellen weisen als Grundeinheit eine Tragachse auf, auf der vorzugsweise mehrere Nocken unverlierbar befestigt sind. Die Nocken haben entsprechend den Erfordernissen unterschiedliche Außenkonturen, wobei ihre Steuerpunkte vorzugsweise unter verschiedenen Winkeln gedreht angeordnet sind.

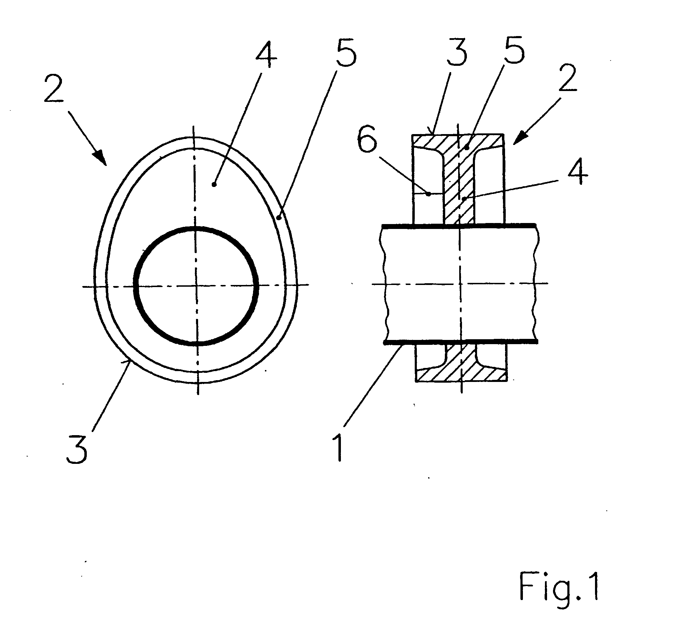

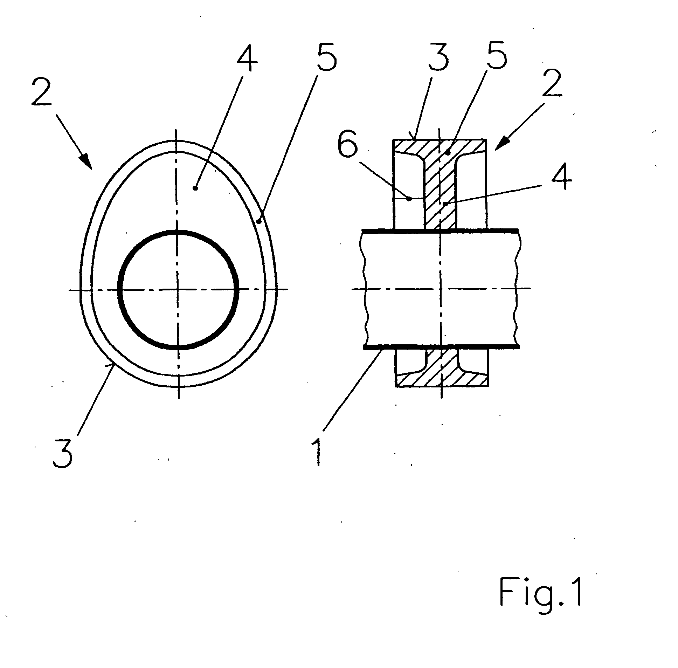

Bei der Ausbildung gemäß Fig. 1 wird als Tragachse ein Tragrohr 1 verwendet. Auf dem Außenmantel des Tragrohrs 1 sind im Abstand zueinander mehrere gleiche oder verschiedene Nocken 2 aufgebracht, die in ihrer Gesamtheit die fertige Nockenwelle bilden. Die Außenkontur 3 ist entsprechend den Erfordernissen geformt. In allen Figuren ist diese Außenkontur 3 etwa Ei-förmig. Der Nocken 2 weist einen sich zum Zentrum erstreckenden schmalen Steg 4 auf, der nach außen in einen Kranz 5 übergeht, welcher den Steg 4 beidseitig etwa um das gleiche Maß 6 überragt. Der Kranz 5 besitzt umlaufend eine etwa gleich bleibende Kontur. Im Ausführungsbeispiel gemäß Fig. 1 verdicken sich beide überstehenden Teile des Kranzes 5 innenseitig, d.h. der jeweilige Innenmantel des überragenden Teils des Kranzes 5 ist kegelstumpfartig ausgebildet. Weiterhin geht der Kranz 5 mit einer Rundung in den Steg 4 über.

Die Verbindung zwischen Nocken 2 und Tragrohr 1 erfolgt in beliebiger bekannter Weise. Das Tragrohr 1 kann im Bereich der aufsitzenden Nocken 2 als Wellrohr mit einem ursprünglich größeren Durchmesser als die Innenbohrung des Nockens 2 ausgebildet sein. Der Nocken 2 wird dann unter Verdrängung von Material über die Wellen des Tragrohrs 1 geschoben und ist somit kraftschlüssig mit diesem verbunden. In gleicher Weise erfolgt die Verbindung, wenn das Tragrohr 1 im Bereich des aufzuschiebenden Nockens 2 eine Rollierung oder Rändelung aufweist. Die Dicke 11 des Steges wird dann im Bereich von 3 bis 5 mm ausgelegt. Es ist jedoch in gleicher Weise möglich, dass der Pressverband zwischen Nocken 2 und Tragrohr 1 mittels Aufweiten des Tragrohrs 1 unter dem Sitz des Nockens 2 erfolgt. Dieses Aufweiten kann beispielsweise durch Hydroumformung vor oder nach dem Aufschieben des Nockens erfolgen. Eine andere Art der Verbindung zwischen Tragrohr 1 und Nocken 2 ist das Schweißen. Hier findet vorteilhaft Laserschweißen Anwendung.

Nocken 2, die entsprechend Fig. 1 direkt auf dem Tragrohr 1 aufsitzen, werden vorteilhaft nur im Außenbereich des Kranzes 5, also an der Außenkontur 3, gehärtet. Die Einhärtetiefe beträgt dann etwa 0,3 bis 2 mm.

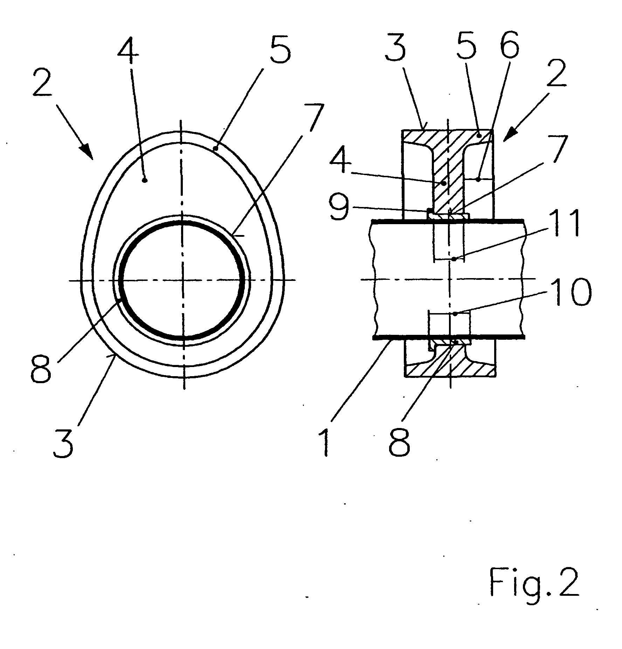

Bei der Verwendung von durchgehärteten Nocken 2 oder Nocken 2, die aus einem natufiarten, hochverschleißfesten Werkstoff bestehen, bietet sich eine Befestigung gemäß Fig. 2 an. Bei dieser Ausbildung weist die innere Öffnung 7 gegenüber dem Außendurchmesser des Tragrohrs 1 ein Übermaß auf. Zwischen der Öffnung 7 und dem Tragrohr 1 wird dann eine Buchse 8 vorzugsweise aus einem weicheren Material eingesetzt. Zur besseren Montage kann diese Buchse 8 einen Kranz 9 aufweisen, mit dem die Buchse 8 am Steg 4 des Nockens 2 anliegt. Die Buchse 8 weist vorzugsweise eine größere Breite 10 auf als die Dicke 11 des Steges 4. Damit kann bei gleicher Flächenpressung am Tragrohr 1 eine größere Festigkeit der Verbindung erreicht werden. Auch die Kerbwirkung zwischen Steg 4 des Nockens 2 auf das Tragrohr 1 wird durch den Einsatz einer Buchse 8 wesentlich verringert.

Die Herstellung des Nockens 2 kann in beliebiger bekannter Weise mittels Kalt- oder Warmschmieden aus einem Ring oder einer Ronde erfolgen. Wenn vorstehend in der

Beschreibung und auch in den Patentansprüchen im Zusammenhang mit den Nocken von Schmieden die Rede ist, so ist unter diesem allgemeinen Begriff eine Druckumformung des Materials bzw. des Werkstücks mit gegeneinander bewegten Formwerkzeugen zu verstehen. Dies kann kalt oder warm, je nach den Erfordernissen des umzuformenden Werkstoffes, erfolgen. In besonderen Fällen kann der Nocken 2 jedoch auch durch Gießen hergestellt werden. Auch eine pulvermetallurgische Herstellung durch Sintern bietet Vorteile, insbesondere dann, wenn der Nocken 2 aus einem hochfesten, verschleißarmen Werkstoff hergestellt werden soll. Als weitere Alternative können der Kranz, 5 und der Steg 4 ursprünglich einzeln hergestellt werden. Dabei lassen sich für diese beiden Teile auch unterschiedliche Werkstoffe verwenden. Die so hergestellten Teile können danach mittels Schweißen zu einem einstückigen Nocken 2 verbunden sein.

Die Buchse 8 wird vorteilhaft aus einem Blech durch Stanzen und Tiefziehen hergestellt. In gleicher Weise kann die Buchse 8 aber auch aus einem Profilblech rundgebogen sein. Bei dieser Ausbildung kann ein Längsschlitz verbleiben, wodurch sich eine automatische Toleranzanpassung der Buchse 8 an die Durchmesser von Nocken 2 und Tragrohr 1 ergibt.

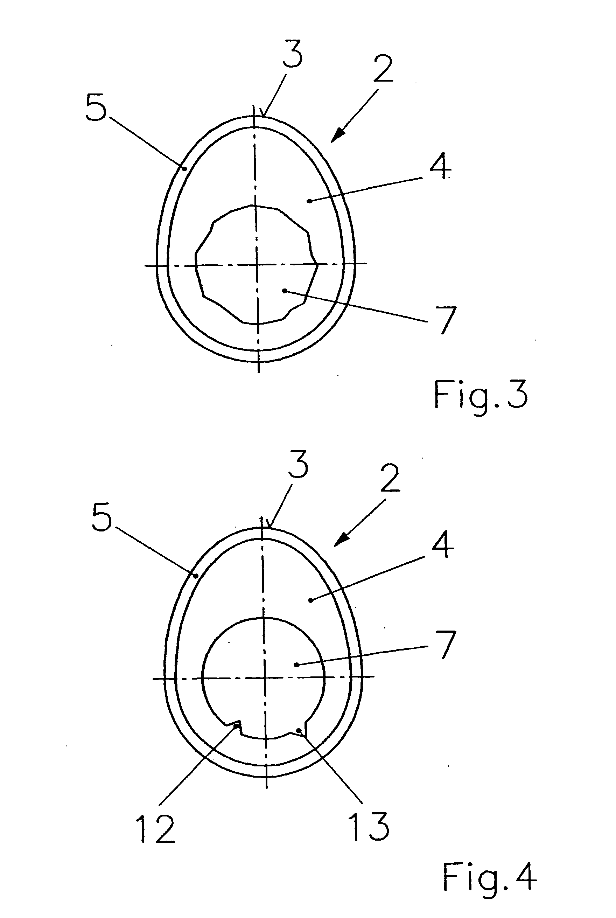

Bei der Forderung nach einer formschlüssigen, evtl. zusätzlich zu einer kraftschlüssigen Verbindung zwischen Tragrohr 1 und Nocken 2, insbesondere einer formschlüssigen Verbindung hinsichtlich Verdrehung des Nockens 2 um das Tragrohr 1, kann die innere Öffnung 7 des Nockens 2, wie in Fig. 3 gezeigt, unrund ausgebildet sein. Diese Ausbildung bietet sich besonders an, wenn das Tragrohr 1 durch Innenhochdruckumformen mit dem Nocken 2 verbunden wird. Eine alternative unrunde Kontur der inneren Öffnung 7 ist in Fig. 4 dargestellt. Hier ragt zum einen ein Zahn 12 in die innere Öffnung 7 des Nockens 2. Gleich wirkend gestaltet sich auch eine zahnförmige Ausbuchtung 13 am Innenumfang der Öffnung 7. Auch eine vollständige Verzahnung der Öffnung 7 kann sinnvoll sein. Diese Ausbildungen eignen sich besonders dann, wenn der Nocken 2 auf einen profilierten Bereich des Tragrohrs 1 axial aufgeschoben wird.

### Bezugszeichenliste

- 1.: Tragrohr
- 2.: Nocken
- 3.: Außenkontur
- 4.: Steg
- 5.: Kranz
- 6.: Maß
- 7.: Öffnung
- 8.: Buchse
- 9.: Kranz
- 10.: Breite
- 11.: Dicke
- 12.: Zahn
- 13.: Ausbuchtung

## Patentansprüche

1. Einstückig ausgebildeter Nocken (2) für eine gebaute Nockenwelle oder Steuerwelle, **dadurch gekennzeichnet, dass** er im Halbschnitt einen T-förmigen Querschnitt mit einem sich zum Zentrum erstreckenden schmalen Steg (4) und einem umlaufenden, beidseitig etwa gleich weit überstehenden Kranz (5) mit etwa gleich bleibendem Querschnitt aufweist.

2. Nocken (2) nach Anspruch 1, **dadurch gekennzeichnet, dass** der Übergang zwischen Kranz (5) und Steg (4) gerundet ausgebildet ist.

3. Nocken (2) nach Anspruch 1 oder 2, **dadurch gekennzeichnet, dass** beide überstehenden Teile des Kranzes (5) sich innenseitig zum Steg (4) hin verdicken.

4. Nocken (2) nach einem oder mehreren der Ansprüche 1 bis 3, **dadurch gekennzeichnet, dass** der Außenbereich des Kranzes (5) oder der gesamte Kranz (5) eine höhere Härte aufweist als der Steg (4).

5. Nocken (2) nach einem oder mehreren der Ansprüche 1 bis 3, **dadurch gekennzeichnet, dass** der gesamte Nocken (2) gehärtet ausgebildet ist oder aus einem naturharten, hochverschleißfesten Werkstoff besteht.

6. Nocken (2) nach einem oder mehreren der Ansprüche 1 bis 5, **dadurch gekennzeichnet, dass** die innere Öffnung (7) kreisförmig ausgebildet ist.

7. Nocken (2) nach einem oder mehreren der Ansprüche 1 bis 5, **dadurch gekennzeichnet, dass** die innere Öffnung (7) unrund ausgebildet ist.

8. Nocken (2) nach Anspruch 6 oder 7, **dadurch gekennzeichnet, dass** an der inneren Öffnung (7) ein oder mehrere gerade oder spitz auslaufende Vorund/oder Rücksprünge vorgesehen sind.

9. Nocken (2) für eine gebaute Nockenwelle oder Steuerwelle, **dadurch gekennzeichnet, dass** er im Halbschnitt einen T-förmigen Querschnitt mit einem sich zum Zentrum erstreckenden schmalen Steg (4) und einem umlaufenden, beidseitig etwa gleich weit überstehenden Kranz (5) mit etwa gleich bleibendem Querschnitt aufweist, wobei der jeweils separat hergestellte Kranz (5) und Steg (4) mittels Schweißen zu einem einstückigen Nocken (2) verbunden werden.

10. Nockenanordnung mit einem Nocken (2) nach einem oder mehreren der Ansprüche 1 bis 9, **dadurch gekennzeichnet, dass** seine innere Öffnung (7) größer ist als der Durchmesser einer Tragachse der Nockenwelle und dass eine Buchse (8) im Ringspalt zwischen Tragachse und Nocken (2) angeordnet ist.

11. Nockenanordnung nach Anspruch 10, **dadurch gekennzeichnet, dass** die Buchse (8) breiter ist als die Dicke (11) des Steges (4) des Nockens (2).

12. Nockenanordnung nach Anspruch 10 oder 11, **dadurch gekennzeichnet, dass** die Buchse (8) einen seitlichen Kranz (9) aufweist.

13. Nockenanordnung nach einem oder mehreren der Ansprüche 10 bis 12, **dadurch gekennzeichnet, dass** die Buchse (8) als Blechformteil ausgebildet ist.

14. Nockenanordnung nach einem oder mehreren der Ansprüche 10 bis 13, **dadurch gekennzeichnet, dass** die Buchse (8) eine Trennfuge aufweist.

15. Verfahren zur Herstellung eines Nockens (2) nach einem oder mehreren der Ansprüche 1 bis 8, **dadurch gekennzeichnet, dass** der Nocken (2) aus Rohr- oder Rondenhalbzeug warm oder kalt geschmiedet wird.

16. Verfahren zum Zusammenbau einer Nockenwelle oder Steuerwelle, bestehend aus einer Welle und mindestens einem Nocken (2), nach einem oder mehreren der Ansprüche 1 bis 9, **dadurch gekennzeichnet, dass** die Tragachse im Fügebereich eine durch Rollen, Walzen oder Rändeln erzielte Aufweitung besitzt, die größer ist als der innere Durchmesser des Nockens (2) und durch Aufschieben des Nockens (2) eine kraft- und/oder formschlüssige Verbindung zwischen Tragachse und Nocken (2) erzielt wird.

## Claims

1. Cam (2) formed as one piece for a built-up cam shaft or control shaft, **characterised in that** in half cross-section it has a T-shaped cross-section with a narrow web (4) which extends towards the centre and with a peripheral collar (5) which protrudes over approximately the same width on both sides and has an approximately uniform cross-section.

2. Cam (2) as claimed in claim 1, **characterised in that** the transition between the collar (5) and web (4) is formed in a rounded manner.

3. Cam (2) as claimed in claim 1 or 2, **characterised in that** both protruding parts of the collar (5) are thickened on the inside towards the web (4).

4. Cam (2) as claimed in any one or several of claims I to 3, **characterised in that** the outer region of the collar (5) or the whole collar (5) is harder than the web (4).

5. Cam (2) as claimed in any one or several of claims 1 to 3, **characterised in that** the whole cam (2) is hardened or consists of a naturally hard, highly wear-resistant material.

6. Cam (2) as claimed in any one or several of claims 1 to 5, **characterised in that** the inner orifice (7) is circular.

7. Cam (2) as claimed in any one or several of claims I to 5, **characterised in that** the inner orifice (7) is non-round.

8. Cam (2) as claimed in claim 6 or 7, **characterised in that** one or a plurality of straight or tapering forward and/or rearward projections are provided on the inner orifice (7).

9. Cam (2) for a built-up cam shaft or control shaft, **characterised in that** in half cross-section it has a T-shaped cross-section with a narrow web (4) which extends towards the centre and with a peripheral collar (5) which protrudes over approximately the same width on both sides and has an approximately uniform cross-section, wherein the collar (5) and web (4) which are each produced separately are connected by means of welding to a one-piece cam (2).

10. Cam arrangement having a cam (2) as claimed in any one or several of claims 1 to 9, **characterised in that** its inner orifice (7) is larger than the diameter of a support axle of the cam shaft and that a bushing (8) is disposed in the annular gap between the support axle and cam (2).

11. Cam arrangement as claimed in claim 10, **characterised in that** the bushing (8) is wider than the thickness (11) of the web (4) of the cam (2).

12. Cam arrangement as claimed in claim 10 or 11, **characterised in that** the bushing (8) has a lateral collar (9).

13. Cam arrangement as claimed in any one or several of claims 10 to 12, **characterised in that** the bushing (8) is formed as a sheet metal formed part.

14. Cam arrangement as claimed in any one or several of claims 10 to 13, **characterised in that** the bushing (8) has a separation gap.

15. Process for producing a cam (2) as claimed in any one or several of claims 1 to 8, **characterised in that** the cam (2) is hot or cold forged from a tubular or round semifinished product.

16. Process for assembling a cam shaft or control shaft, consisting of a shaft and at least one cam (2), as claimed in any one or several of claims 1 to 9, **characterised in that** in the gap region the support axle has an area which is widened in a controlled manner by rolling, milling or knurling and which is larger than the inner diameter of the cam (2) and by pushing on the cam (2) a non-positive and/or positive-locking connection is produced between the support axle and the cam (2).

## Revendications

1. Came (2) monobloc pour un arbre à cames ou un arbre de commande monté, **caractérisée en ce qu'**en demi-coupe, elle présente une section transversale en forme de T avec une aile médiane étroite (4) qui s'étend jusqu'au centre et une couronne périphérique (5) qui en déborde de chaque côté sur sensiblement la même largeur et dont la section transversale est sensiblement constante.

2. Came (2) selon la revendication 1, **caractérisée en ce que** la transition entre la couronne (5) et l'aile médiane (4) est arrondie.

3. Came (2) selon les revendications 1 ou 2, **caractérisée en ce que** les deux parties débordantes de la couronne (5) s'épaississent vers l'intérieur en direction de l'aile médiane (4).

4. Came (2) selon l'une ou plusieurs des revendications 1 à 3, **caractérisée en ce que** la zone extérieure de la couronne (5) ou toute la couronne (5) présente une plus grande dureté que l'aile médiane (4).

5. Came (2) selon l'une ou plusieurs des revendications 1 à 3, **caractérisée en ce que** toute la came (2) est durcie ou est constituée d'une matière naturellement dure et très résistante à l'usure.

6. Came (2) selon l'une ou plusieurs des revendications 1 à 5, **caractérisée en ce que** l'ouverture intérieure (7) est circulaire.

7. Came (2) selon l'une ou plusieurs des revendications 1 à 5, **caractérisée en ce que** l'ouverture intérieure (7) n'est pas circulaire.

8. Came (2) selon les revendications 6 ou 7, **caractérisée en ce qu'**une ou plusieurs saillies et/ou un ou plusieurs retraits en ligne droite ou qui se terminent en pointe sont prévus sur l'ouverture intérieure (7).

9. Came (2) pour un arbre à cames ou un arbre de commande montés, **caractérisée en ce qu'**en demi-coupe, elle présente une section transversale en forme de T avec une aile médiane étroite (4) qui s'étend jusqu'au centre et une couronne périphérique (5) qui en déborde de chaque côté sur sensiblement la même largeur et dont la section transversale est sensiblement constante, dans laquelle la couronne (5) et l'aile médiane (4) réalisées séparément sont reliées par soudage pour former une came monobloc (2).

10. Agencement de came qui présente une came (2) selon l'une ou plusieurs des revendications 1 à 9, **caractérisé en ce que** l'ouverture intérieure (7) de la came est plus grande que le diamètre d'un axe porteur de l'arbre à cames et **en ce qu'**une douille (8) est agencée dans l'interstice annulaire situé entre l'axe porteur et la came (2).

11. Agencement de came selon la revendication 10, **caractérisé en ce que** la largeur de la douille (8) est supérieure à l'épaisseur (11) de l'aile médiane (4) de la came (2).

12. Agencement de came selon les revendications 10 ou 11, **caractérisé en ce que** la douille (8) présente une couronne latérale (9).

13. Agencement de came selon l'une ou plusieurs des revendications 10 à 12, **caractérisé en ce que** la douille (8) est réalisée comme pièce en tôle moulée.

14. Agencement de came selon l'une ou plusieurs des revendications 10 à 13, **caractérisé en ce que** la douille (8) présente un joint de séparation.

15. Procédé de fabrication d'une came (2) selon l'une ou plusieurs des revendications 1 à 8, **caractérisé en ce que** la came (2) est forgée à chaud ou à froid à partir de produits semi-finis tubulaires ou ronds.

16. Procédé de montage d'un arbre à cames ou d'un arbre de commande, constitués d'un arbre et d'au moins une came (2) selon l'une ou plusieurs des revendications 1 à 9, **caractérisé en ce que** dans la zone du joint, l'axe porteur présente un élargissement obtenu au moyen de rouleaux, de cylindres ou de molettes et plus grand que le diamètre intérieur de la came (2), une liaison en correspondance mécanique et/ou géométrique entre l'axe porteur et la came (2) étant obtenue du fait de l'insertion de la came (2).
